# EUROPÄISCHE PATENTSCHRIFT

(11) **EP 3 025 855 B1**
(45) Veröffentlichungstag und Bekanntmachung des Hinweises auf die Patenterteilung: **06.05.2020**
(21) Anmeldenummer: 15195212.4
(22) Anmeldetag: 18.11.2015
(51) Int. Cl.: B32B 5/00, B32B 5/02, B32B 7/00, B32B 7/02, B32B 7/10, B32B 9/00, B32B 9/04, B32B 15/00, B32B 15/04, B32B 15/20

(54) **STRUKTURELEMENT**
STRUCTURAL ELEMENT
ÉLEMENT STRUCTUREL

(30) Priorität: 21.11.2014 DE 102014017198
(43) Veröffentlichungstag der Anmeldung: 01.06.2016
(73) Patentinhaber: Airbus Defence and Space GmbH, 85521 Ottobrunn (DE)
(72) Erfinder: Karch, Christian, 85579 Neubiberg (DE); Dittrich, Kay W., 85051 Ingolstadt (DE)
(74) Vertreter: Isarpatent

(56) Entgegenhaltungen:
- US-A1- 2010 090 061
- US-A1- 2011 031 350
- US-A1- 2011 236 622
- US-A1- 2014 011 414
- US-B1- 6 460 240

## Beschreibung

Die Erfindung betrifft ein Strukturelement, insbesondere für ein Luftfahrzeug.

Im Bereich der Luft- und Raumfahrt werden zunehmend Faserverbundwerkstoffe eingesetzt. Auch für Strukturelemente werden diese zunehmend verbaut. Insbesondere finden hierbei Faserverbundwerkstoffe in Form von kohlenstofffaserverstärkten Kunststoffen (CFK) Anwendung.

Insbesondere bei an einem Luftfahrzeug außen gelegenen Strukturelementen müssen generell Vorkehrungen gegenüber Blitzschlägen getroffen werden.

Bei einem Blitzschlag kommt es zuerst zu einer Ausbildung eines Vorentladungs-Plasmakanals (streamer-leader formation) und im weiteren Verlauf zu einer Hochstrom-Entladung (lightning discharge/ return stroke). Der Vorgang der Hochstrom-Entladung ist mit einem hohen Stromfluss und Wärmeeintrag in die unmittelbar betreffende CFK-Struktur verbunden. Die den einzelnen Zonen eines Flugzeugs zugeordnete Strombelastung durch einen Blitzschlag ist z.B. in der EUROCAE ED-84 Norm festgelegt. Hierbei wird nicht zwischen CFK- und metallischen Strukturen unterschieden. Da die Wärme- und die elektrische Leitfähigkeit von CFK deutlich geringer ist als die von Metallen, müssen CFK-Strukturen stärker als diese geschützt werden. Als Standard-Blitzschutzmaßnahme wird eine expandierte Kupferfolie als Blitzschutzschicht auf die CFK-Struktur aufgebracht, die dazu dient, den elektrischen Strom und die Wärme abzuführen. Wegen des Vorliegens zweifach gekrümmter Strukturen hat sich der Einsatz expandierter Metallfolie als notwendig erwiesen. Es zeigt sich, dass besonders bei lackierten CFK-Strukturen eine mechanische Schädigung durch Blitzschlag im Wesentlichen durch eine Explosion der Blitzschutzschicht verursacht wird. Ein solcher nicht leitfähiger, dielektrischer Lack wird zum Schutz gegen Umwelteinflüsse auf die Struktur mit der Metallfolie außen aufgebracht. Diese Explosion der Blitzschutzschicht umfasst eine Explosion des Kupfers selbst, sowie der Epoxidharzmatrix, mit der die expandierte Kupferfolie auf der CFK-Struktur einlaminiert ist. Im Falle einer nicht ausreichend dimensionierten Blitzschutzschicht kommt es zum Eindringen des Blitzstroms in die CFK-Struktur und darauffolgend zur Explosion der Epoxidharzmatrix der Kohlenstofffaserverbundstruktur. Die Explosion des Blitzschutzes bzw. der Epoxidharzmatrix wird durch die direkte Wärme des Plasmakanals und die Joule'sche Wärme des Blitzstroms verursacht.

Durch die physikalischen Eigenschaften nichtleitender, dielektrischer Schichtsysteme findet bei einem Blitzeinschlag eine Konzentration bzw. Einschnürung des Plasmakanals am Fußpunkt des Plasmakanals statt. Außerdem behindern nichtleitende, dielektrische Schichtsysteme ein gleichförmiges Gleiten des Fußpunktes des Blitzkanals über die Oberfläche der Struktur und somit eine gleichmäßige Verteilung der Wärme- und Strombelastung über eine größere Fläche der Struktur. Dadurch kann der Plasmakanal länger am Blitzeinschlagpunkt verweilen und dadurch die darunterliegende Struktur stärker schädigen.

Zur Verbesserung des Blitzschutzes wurde vorgeschlagen, elektrisch nicht leitende Schichten unterhalb des äußeren Lackes, aber oberhalb der Blitzschutzschicht vorzusehen. Weiterhin wurde vorgeschlagen, die CFK-Struktur durch elektrisch nicht leitende Schichten, wie etwa mit Glasfasern, die unterhalb der Blitzschutzschicht angeordnet sind, zu schützen. Derartige Maßnahmen zeigten jedoch geringe Wirkung bzw. erhöhten teilweise sogar die mechanische Schädigung in der CFK-Struktur. Beispielsweiser druckschriftlicher Stand der Technik im Bereich von Windkraftanlagen und insbesondere bzgl. deren Rotorblätter ist aus der DE 10 2010 017 62 A1 bekannt. Das Rotorblatt besteht zum Blitzschutz zumindest teilweise aus einem Faserverbundkunststoff mit in der Matrix des Faserverbundkunststoffs eingebetteten massiven Metalleinlegeteilen, aber nicht Metallfasern.

Des Weiteren wurden Maßnahmen vorgeschlagen, die elektrische Leitfähigkeit der Lackschicht bzw. der CFK-Struktur stark zu erhöhen. Dies führte jedoch zu keinen oder höchstens vernachlässigbaren Effekten, da erst bei solchen Leitfähigkeiten von CFK eine verbesserte Ableitung des Blitzes erfolgen würde, die der Leitfähigkeit von Metallen wie Kupfer oder Aluminium entsprechen würde und somit praktisch nicht umsetzbar sind. US2007093163 offenbart ein umweltstabiles Hybridgewebesystem zum äußeren Schutz einer Struktur.

Aufgabe der Erfindung ist, ein Strukturelement für ein Luftfahrzeug zu schaffen, das die Nachteile des Stands der Technik überwindet, und dabei insbesondere den Blitzschutz von Bauteilen aus CFK zu verbessern sowie die mechanische Schädigung der CFK-Struktur im Falle eines Blitzeinschlags zu vermeiden oder zumindest zu reduzieren.

Diese Aufgabe wird mit einem Strukturelement mit den Merkmalen des Anspruchs 1 gelöst.

Vorteilhafte Ausführungsformen und Weiterbildungen sind in den Unteransprüchen gekennzeichnet.

Ein Strukturelement gemäß der Erfindung, das insbesondere für ein Luftfahrzeug, wie etwa ein Flugzeug, vorgesehen ist, enthält ein Laminat mit einer Mehrzahl von Lagen aus einem Faserverbundkunststoff mit Kohlenstofffasern und eine Blitzschutzschicht. Das Laminat enthält zumindest eine hybride Schicht, die aus einem Kohlenstofffaser-Absorptionsfaser-Verbund besteht, wobei die Bruchdehnung der Absorptionsfaser höher ist als die Bruchdehnung der Kohlenstofffasern.

Der Erfindung liegt die Erkenntnis zugrunde, dass die bekannten Blitzschutzmaßnahmen die Explosion der Blitzschutzschicht und/oder der Epoxidharzmatrix des Kohlenstofffaserverbundes nicht vollständig verhindern können. Diese Explosion im *µ*s-Bereich (während der Anstiegszeit der transienten Blitzstromkomponente A bzw. D nach der EUROCAE ED-84-Norm) verursacht Schockwellen, die die CFK-Struktur ähnlich wie ein Hochgeschwindigkeitsimpact mechanisch erheblich schädigen. Es kommt im Wesentlichen zur Delamination der einzelnen CFK-Lagen und zum Bruch der Epoxidharzmatrix. Insbesondere bei dicken dielektrischen Beschichtungen der CFK-Struktur kommt es zum Bruch und somit zu einer katastrophalen mechanischen Schädigung der gesamten CFK-Struktur, weil das Laminat aufgrund des Bruches der Kohlenstofffasern keine mechanischen Lasten mehr tragen kann.
Daher wird vorgeschlagen, das Laminat mit zumindest einer hybriden Schicht zu verstärken. Die größere Bruchdehnung der Absorptionsfasern und das damit verbundene duktilere Verhalten bewirken eine bessere Absorption der Energie der durch eine Explosion der Blitzschutzschicht bzw. der Epoxidharzmatrix verursachten Schockwellen. Dies führt dazu, dass die gesamte CFK-Struktur bei einem Blitzeinschlag mechanisch weniger stark beschädigt wird. Auch ein Bruch einzelner Kohlenstofffasern führt nicht dazu, dass die CFK-Struktur katastrophal mechanisch geschädigt wird, da die Absorptionsfasern der zumindest einen hybriden Schicht eine ausreichende Restfestigkeit der CFK-Struktur bewirken. Des Weiteren werden durch die Absorption der Energie der Schockwellen in der zumindest einen Hybridschicht die übrigen, konventionellen CFK-Einzellagen des Laminats weniger stark geschädigt.

Bevorzugt enthalten die Absorptionsfasern Stahlfasern, insbesondere Edelstahlfasern, bzw. sind die Absorptionsfasern Stahlfasern, insbesondere Edelstahlfasern. Diese besitzen eine größere Bruchdehnung als die der Kohlenstofffasern; die Bruchdehnung der Edelstahlfasern ist z.B. drei bis fünf Mal größer als der Kohlenstofffasern. Dadurch wird das duktile Verhalten der CFK-Struktur besonders stark erhöht. Entsprechend wird eine besonders hohe Absorption der Energie der durch eine Explosion der Blitzschutzschicht bzw. der Epoxidharzmatrix verursachten Schockwellen bewirkt. Dies führt dazu, dass die gesamte CFK-Struktur bei einem Blitzeinschlag mechanisch stabiler ist und deutlich weniger beschädigt wird.

Eine Hybridschicht aus einem Kohlenstofffaser-Stahlfaser-Verbund, insbesondere aus einem Kohlenstofffaser-Edelstahlfaser-Verbund, besitzt des Weiteren wegen der hohen elektrischen und thermischen Leitfähigkeit von Stahlfasern, insbesondere Edelstahlfasern, den Vorteil, dass die Wahrscheinlichkeit bzw. die Intensität der Explosion der Epoxidharzmatrix des Kohlenstofffaserverbunds reduziert wird, da weniger Joulsche Wärme generiert wird und die generierte Wärme schneller abgeführt wird.

Nach einer Variante der Erfindung ist eine oberste Lage des Laminats aus der Hybridschicht gebildet.

Nach einer weiteren Variante ist eine unterste Lage des Laminats aus der Hybridschicht gebildet. In beiden Fällen, die vorteilhaft miteinander kombiniert werden können, sind die oben beschriebenen Vorteile der Erfindung wegen der Nähe zur oberen bzw. unteren Oberfläche des Strukturelements besonders wirksam.

Nach einem Aspekt der Erfindung ist die Hybridschicht aus einer unidirektionalen Lage, einem Geflecht, einem Gelege und/oder einem Gewebe aus Kohlenstofffasern und Absorptionsfasern gebildet. Unabhängig von der genauen Geometrie bzw. inneren Struktur der Hybridschicht und damit der Kohlenstoff- und Absorptionsfasern der Hybridschicht werden die beschriebenen Effekte und Vorteile erzielt.

Nach einem weiteren Aspekt der Erfindung enthält die Blitzschutzschicht eine metallische Folie, insbesondere aus Kupfer oder einer Kupferlegierung.

Das Strukturelement kann eine elektrisch nicht leitfähige, dielektrische Schutzschicht umfasst. Die dielektrische Schutzschicht ist insbesondere zum Schutz gegen externe Bedrohungen und Umwelteinflüsse ausgebildet. Unter einer elektrisch nicht leitfähigen dielektrischen Schutzschicht wird gemäß der Erfindung insbesondere eine Schutzschicht verstanden, deren elektrische Leitfähigkeit, gemessen bei Raumtemperatur, kleiner ist als 10⁻⁶ S/m.

Es kann des Weiteren vorteilhaft, z.B. um die CFK Struktur gegen Umwelteinflüsse zu schützen, sein, dass die elektrisch nicht leitfähige, dielektrische Schicht oberhalb der Blitzschutzschicht angeordnet ist. "Oberhalb" bezeichnet hierbei die Richtung weiter zur äußeren Oberfläche des Stukturelements hin gewandt, die bei einem Blitzeinschlag eher getroffen werden würde.

Nach einer weiteren Variante der Erfindung sind alle Lagen des Laminats Hybridschichten, die aus einem Kohlenstofffaser-Absorptionsfaser-Verbund bestehen. Dies bewirkt eine besonders starke Ausnutzung des beschriebenen Effekts der Absorption von Schockwellen im Strukturelement und kann so besonders stark Beschädigungen vorbeugen oder zumindest verringern. Diese Variante ist bei besonders gefährdeten CFK-Stukturen denkbar, beispielsweise weil diese besonders exponiert oder anfällig sind.

Nach einer anderen Variante ist nur jede n-te Lage des Laminats eine Hybridschicht, wobei n eine natürliche ganze Zahl ist. So kann beispielsweise jede zweite oder jede dritte Lage des Laminats nicht aus Kohlenstofffaserverbund, sondern aus Kohlenstofffaser-Absorptionsfaser-Verbund (Hybridschicht) bestehen.

Auch jede andere beliebige Kombination aus Hybridschichten, die aus Kohlenstofffaser-Absorptionsfaser-Verbund bestehen, mit Kohlenstofffaserverbundlagen, ist von der Erfindung umfasst.
Gemäß einer Ausführungsform der Erfindung enthält die nicht leitende, dielektrische Schicht Kohlenstoffkurzfasern, CNT's oder andere elektrisch leitfähige Kohlenstoffallotrope, wobei der Anteil der Kohlenstoffallotrope unterhalb der Perkolationsschwelle liegt. Durch die Kohlenstoffallotrope wird die elektrische Durchschlagfestigkeit der dielektrischen Schicht reduziert. Dies kann vorteilhaft die Verweildauer des Blitzkanals an einem festen Punkt der Oberfläche des Strukturelements und somit auch die lokal eingebrachte Wärmeenergie und den elektrischen Blitzstrom verringern. Die Aufweitung des Plasmakanals durch die Reduzierung der Durchschlagfestigkeit bewirkt eine Verteilung des Stromflusses des Wärmeeintrags auf eine größere Fläche mit dem Resultat einer reduzierten thermischen Belastung der Faserverbundstruktur im Bereich des Fußpunktes. Somit reduziert sich die eingebrachte Leistung pro Fläche und somit der thermo-mechanische Schaden der CFK-Struktur.

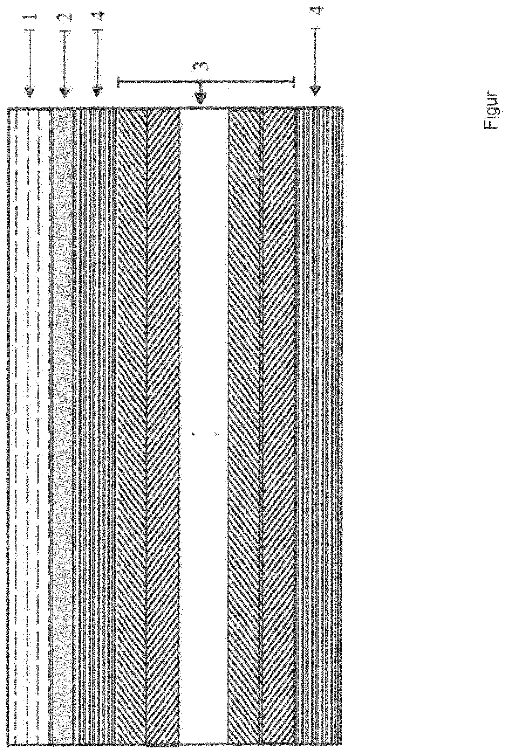

Im Folgenden wird ein Ausführungsbeispiel der Erfindung anhand einer Figur näher erläutert. Dabei zeigt die Figur schematisch den Lagenaufbau eines erfindungsgemäßen Strukturelements (dessen Struktur sowohl planar als auch gekrümmt sein kann).

Ein erfindungsgemäßes Strukturelement ist gemäß dem Ausführungsbeispiel ein Rumpfelement eines Flugzeugs, das im Wesentlichen aus einem Laminat aus Lagen von Kohlenstofffaserverbundkunststoff 3 aufgebaut ist. Matrixmaterial ist ein Epoxidharz. Die oberste und unterste Lage des Laminats besteht aus einer Hybridschicht 4, die aus einem Kohlenstofffaser-Absorptionsfaser-Verbund besteht. Die Absorptionsfasern in diesem besonderen Beispiel sind Stahl- oder Edelstahlfasern. Auf die oberste Hybridschicht 4 ist eine expandierte Kupferfolie als Blitzschutzschicht 2 laminiert. Darauf ist eine elektrisch nichtleitende dielektrische Schutzschicht 1 aufgebracht.
Trifft auf das Flugzeug während des Flugs ein Blitz, der in das Strukturelement einschlägt, kommt es zwar zu einer Explosion der Blitzschutzschicht. Die 3- bis 5-fache Bruchdehnung der Edelstahlfasern im Vergleich zu den Kohlenstofffasern des Laminats bewirkt jedoch eine bessere Absorption der Energie der durch eine Explosion der Blitzschutzschicht bzw. der Epoxidharzmatrix verursachten Schockwellen. Dies führt dazu, dass die gesamte CFK-Struktur durch den Blitzeinschlag mechanisch weniger stark beschädigt wird. Zwar brechen einzelne Kohlenstofffasern. Dies führt jedoch nicht dazu, dass die ganze CFK-Struktur katastrophal mechanisch geschädigt wird. Die elektrische und thermische Leitfähigkeit der Edelstahlfasern in den Hybridschichten 4 bewirkt des Weiteren stark reduzierte thermische Schädigungen. Der Reparaturaufwand des beschädigten erfindungsgemäßen Strukturelements deutlich niedriger als wenn es konventionell aufgebaut wäre.
Des Weiteren erlauben die beschriebenen Effekte, die Kupferfolie, die den Blitzstrom und die durch den Plasmakanal eingebrachte Wärme flächig verteilt, dünner als herkömmlich zu gestalten. Dadurch wird ein Teil des Gewichts gespart, das herkömmlich für den Blitzschutz nötig wäre.

Nach einer Variante des Ausführungsbeispiels (nicht dargestellt) ist zusätzlich zu der obersten und untersten Hybridschicht 4 noch jede vierte Lage der CFK-Struktur durch eine Hybridschicht ersetzt.
Nach einer weiteren Variante enthält die nicht leitende, dielektrische Schutzschicht 1 Kohlenstoffallotrope, wobei der Anteil der Kohlenstoffkurzfasern unterhalb der Perkolationsschwelle liegt. Dies reduziert weiter die thermische und mechanische Schädigung des erfindungsgemäßen Strukturelements gemäß dem Ausführungsbeispiel.
Es kann vorteilhaft sein, den gesamten Rumpf mit Strukturelementen der Erfindung zu versehen, oder auch Bereiche, die Blitzschlag gegenüber besonders gefährdet sind, wie z.B. im Bereich des Rumpfes oder der Tragflächen.

Die Erfindung betrifft ein Strukturelement, insbesondere für ein Luftfahrzeug, wie etwa ein Flugzeug, das ein Laminat mit einer Mehrzahl von Lagen aus einem Faserverbundkunststoff mit Kohlenstofffasern, eine Blitzschutzschicht und gegebenenfalls eine elektrisch nicht leitfähige dielektrische Schutzschicht enthält. Gemäß der Erfindung enthält das Laminat zumindest eine hybride Schicht, die aus einem Kohlenstofffaser-Absorptionsfaser-Verbund besteht, wobei die Bruchdehnung der Absorptionsfaser höher ist als die Bruchdehnung der Kohlenstofffasern.

### Bezugszeichenliste

- 1: elektrisch nicht-leitende Schutzschicht
- 2: Blitzschutzschicht, Kupferfolie
- 3: Kohlenstofffaserverbundwerkstoff
- 4: Hybridschicht

## Patentansprüche

1. Strukturelement, insbesondere für ein Luftfahrzeug, wie etwa ein Flugzeug, enthaltend ein Laminat mit einer Mehrzahl von Lagen aus einem Faserverbundkunststoff (4) mit Kohlenstofffasern und eine Blitzschutzschicht , **dadurch gekennzeichnet, dass** das Laminat zumindest eine hybride Schicht (4) enthält, die aus einem Kohlenstofffaser-Absorptionsfaser-Verbund besteht, wobei die Bruchdehnung der Absorptionsfaser höher ist als die Bruchdehnung der Kohlenstofffasern.

2. Strukturelement nach Anspruch 1, **dadurch gekennzeichnet, dass** die Absorptionsfasern Stahlfasern, insbesondere Edelstahlfasern, sind.

3. Strukturelement nach Anspruch 1 oder 2, **dadurch gekennzeichnet, dass** eine oberste Lage des Laminats aus der Hybridschicht (4) gebildet ist.

4. Strukturelement nach zumindest einem der vorhergehenden Ansprüche, **dadurch gekennzeichnet, dass** eine unterste Lage des Laminats aus der Hybridschicht (4) gebildet ist.

5. Strukturelement nach zumindest einem der vorhergehenden Ansprüche, **dadurch gekennzeichnet, dass** die Hybridschicht (4) aus einer unidirektionalen Lage, einem Geflecht, einem Gelege und/oder einem Gewebe aus Kohlenstofffasern und Absorptionsfasern gebildet ist.

6. Strukturelement nach zumindest einem der vorhergehenden Ansprüche, **dadurch gekennzeichnet, dass** die Blitzschutzschicht (2) eine metallische Folie, insbesondere aus Kupfer oder einer Kupferlegierung, enthält.

7. Strukturelement nach zumindest einem der vorhergehenden Ansprüche, **dadurch gekennzeichnet, dass** das Strukturelement eine elektrisch nicht leitfähige, dielektrische Schutzschicht (1) umfasst.

8. Strukturelement nach Anspruch 7, **dadurch gekennzeichnet, dass** die elektrisch nicht leitfähige, dielektrische Schicht (1) oberhalb der Blitzschutzschicht (2) angeordnet ist.

9. Strukturelement nach zumindest einem der vorhergehenden Ansprüche, **dadurch gekennzeichnet, dass** alle Lagen des Laminats Hybridschichten (4) sind, die aus einem Kohlenstofffaser-Absorptionsfaser-Verbund bestehen.

10. Strukturelement nach zumindest einem der Ansprüche 1 bis 8, **dadurch gekennzeichnet, dass** jede n-te Lage des Laminats eine Hybridschicht (4) ist, mit n einer natürlichen ganzen Zahl.

11. Strukturelement nach zumindest einem der vorhergehenden Ansprüche, **dadurch gekennzeichnet, dass** die nicht leitende, dielektrische Schicht (1) Kohlenstoffallotrope enthält, wobei der Anteil der Kohlenstoffallotrope unterhalb der Perkolationsschwelle liegt.

12. Strukturelement nach Anspruch 11, **dadurch gekennzeichnet, dass** die Kohlenstoffallotrope, wie z.B. Kohlenstoffkurzfasern und/oder CNT's enthalten.

## Claims

1. Structural element, in particular for an aerial vehicle, such as, for example, an aircraft, containing a laminate having a multiplicity of layers made of a fibre composite polymer (4) with carbon fibres and a lightning protection layer, **characterized in that** the laminate contains at least one hybrid layer (4) composed of a carbon fibre/absorption fibre composite, wherein the elongation at break of the absorption fibres is higher than the elongation at break of the carbon fibres.

2. Structural element according to Claim 1, **characterized in that** the absorption fibres are steel fibres, in particular high-grade steel fibres.

3. Structural element according to Claim 1 or 2, **characterized in that** an uppermost layer of the laminate is formed by the hybrid layer (4).

4. Structural element according to at least one of the preceding claims, **characterized in that** a lowermost layer of the laminate is formed by the hybrid layer (4) .

5. Structural element according to at least one of the preceding claims, **characterized in that** the hybrid layer (4) is formed by a unidirectional layer, a mesh, a nonwoven fabric and/or a woven fabric made of carbon fibres and absorption fibres.

6. Structural element according to at least one of the preceding claims, **characterized in that** the lightning protection layer (2) contains a metallic foil, in particular made of copper or a copper alloy.

7. Structural element according to at least one of the preceding claims, **characterized in that** the structural element comprises an electrically nonconductive dielectric protective layer (1).

8. Structural element according to Claim 7, **characterized in that** the electrically nonconductive dielectric layer (1) is arranged above the lightning protection layer (2).

9. Structural element according to at least one of the preceding claims, **characterized in that** all layers of the laminate are hybrid layers (4) composed of a carbon fibre/absorption fibre composite.

10. Structural element according to at least one of Claims 1 to 8, **characterized in that** every nth layer of the laminate is a hybrid layer (4), with n being a natural integer.

11. Structural element according to at least one of the preceding claims, **characterized in that** the nonconductive dielectric layer (1) contains carbon allotropes, wherein the proportion of carbon allotropes lies below the percolation threshold.

12. Structural element according to Claim 11, **characterized in that** the carbon allotropes comprise, for example, short carbon fibres and/or CNTs.

## Revendications

1. Élément de structure, en particulier pour un aéronef, comme par exemple un avion, contenant un stratifié comportant une pluralité de couches composées d'un plastique composite fibreux (4) comportant des fibres de carbone et une couche de protection contre la foudre, **caractérisé en ce que** le stratifié contient au moins une couche hybride (4), qui est constituée d'un composite de type fibre d'absorption-fibre de carbone, l'allongement de rupture de la fibre d'absorption étant supérieur à l'allongement de rupture des fibres de carbone.

2. Élément de structure selon la revendication 1, **caractérisé en ce que** les fibres d'absorption sont des fibres d'acier, en particulier des fibres d'acier inoxydable.

3. Élément de structure selon la revendication 1 ou 2, **caractérisé en ce qu'**une couche supérieure du stratifié est formée de la couche hybride (4).

4. Élément de structure selon au moins l'une des revendications précédentes, **caractérisé en ce qu'**une couche inférieure du stratifié est formée de la couche hybride (4).

5. Élément de structure selon au moins l'une des revendications précédentes, **caractérisé en ce que** la couche hybride (4) est formée d'une couche unidirectionnelle, d'un treillis, d'un canevas et/ou d'un tissu composé(e) de fibres de carbone et de fibres d'absorption.

6. Élément de structure selon au moins l'une des revendications précédentes, **caractérisé en ce que** la couche de protection (2) contre la foudre contient une feuille métallique, en particulier composée de cuivre ou d'un alliage de cuivre.

7. Élément de structure selon au moins l'une des revendications précédentes, **caractérisé en ce que** l'élément de structure comprend une couche (1) de protection diélectrique, électriquement non conductrice.

8. Élément de structure selon la revendication 7, **caractérisé en ce que** la couche (1) diélectrique, électriquement non conductrice, est disposée au-dessus de la couche de protection (2) contre la foudre.

9. Élément de structure selon au moins l'une des revendications précédentes, **caractérisé en ce que** toutes les couches du stratifié sont des couches hybrides (4), qui sont constituées d'un composite de type fibre de carbone-fibre d'absorption.

10. Élément de structure selon au moins l'une des revendications 1 à 8, **caractérisé en ce que** chaque n^{ème} couche du stratifié est une couche hybride (4), n étant un nombre entier naturel.

11. Élément de structure selon au moins l'une des revendications précédentes, **caractérisé en ce que** la couche (1) diélectrique, non conductrice, contient des allotropes du carbone, la proportion en allotropes du carbone se situant en dessous du seuil de percolation.

12. Élément de structure selon la revendication 11, **caractérisé en ce que** les allotropes du carbone contiennent par exemple des fibres courtes de carbone et/ou des NTC.
